Europäisches Patentamt

European Patent Office

Office européen des brevets

(11) Publication number: **0 175 462**
**A2**

(12) # EUROPEAN PATENT APPLICATION

(21) Application number: 85305387.4

(22) Date of filing: 29.07.85

(51) Int. Cl.⁴: **A 47 J 27/00**, A 47 J 27/022, A 47 J 36/02

(30) Priority: 20.09.84 US 652119

(43) Date of publication of application: 26.03.86
Bulletin 86/13

(84) Designated Contracting States: DE FR GB IT

(71) Applicant: REGAL WARE, INC., 1675 Reigle Drive,
Kewaskum Wisconsin 53040 (US)

(72) Inventor: Twohig, Patrick D., 329 Wendell, Campbellsport
Wisconsin 53010 (US)
Inventor: Mayer, David G., 1438 Wayne Road, West Bend
Wisconsin 53095 (US)
Inventor: Kluever, Melvin L., 6822 Eastwood Trail, West
Bend Wisconsin 53095 (US)

(74) Representative: Prentice, Raymond Roy, R.R. Prentice &
Co. 34 Tavistock Street, London WC2E 7PB (GB)

(54) Cooking pan bottom configuration.

(57) A die formed cooking utensil (10) for use on a cooking
heat source has a side wall (11) and a bottom wall (12). The
bottom wall is provided with a raised area (15) generally
centred on the centre of the utensil, said raised area having a
maximum elevation of between 0.17 and 0.25 cm above the
lowermost plane (14) of the bottom wall when the utensil is
cold. The bottom wall is deformed to be substantially planar
when heated to cooking temperature.

The raised area may comprise an annular region (15) which
surrounds a less elevated central region (17) but other configu-
ration of the bottom wall are also possible.

- 1 -

Title: COOKING PAN BOTTOM CONFIGURATION

This invention relates to a cooking pan bottom configuration. Typically electric or flat ceramic cooking ranges produce high heat at the surface of a pan bottom either by heating an electric heating element or by burning gas or some other fuel. Heat transfer to a pan bottom is most efficient when the pan is in flat contact with a highly heated surface. That is particularly the case when an electric range is involved because much more efficient heat transfer is achieved when as much as possible of the pan bottom is in contact with the plane surface of the heating element.

The dies on which such pans are made are therefore arranged to produce a flat bottom surface. However, the process of making the pan produces stresses in the metal. When exposed to high heat the typical result is that the pan bottom distorts to become concave or convex. In severe cases it may "oil can" from one to the other which is extremely undesirable. The cooking habits of certain groups of people who heat the pan first before placing the food in it aggravates the problem because until the food and liquid are in the pan there is no heat transfer from them to keep the temperature of the metal down.

The present invention aims to solve this problem by providing a cooking utensil which has a non-planar bottom wall when cold. This would appear to aggravate the problem but in fact it relieves the problem.

According to the invention, there is provided a die formed cooking utensil for use on a cooking heat source, and having a side wall and a bottom wall, wherein the bottom wall is provided with a raised area generally centred on the centre of the utensil, said raised area having a maximum elevation of between 0.17 and 0.25cm above the lowermost plane of the bottom wall when said utensil is cold, said bottom wall being deformed to be substantially planar when heated to cooking temperature.

Certain prior U.S. patent specifications show superficially similar shapes for other purposes. For instance U.S. Patent Specification No. 3237910 shows a greatly exaggerated form of non-planar bottom wall not for the purpose of producing a flat pan bottom but for the purpose of producing a non-flat form in a cake to compensate for expected changes in the shape of the cake. It does not appear to be intended for use on a surface burner of a cooking range. There is no disclosure that the cake pan can ever become flat bottomed. In addition, U.S. Patent Specifications Nos. 2413204 and 254770 have concave surfaces and are intended to stay that way; and U.S. Patent Specifications Nos. 2782782 and 3322113 have contoured surfaces within the pan but flat surfaces to engage the cooking top surface. U.S. Patent Specification No. 3734077 shows a pan whose bottom surface is stepped upwardly but it is a food service dish and the structure is intended to retain heat and to permit heat expansion. U.S. Patent Specification No. 3971361 shows a pan with a flat flexible bottom to conform to a convex cooking surface. The flexible sheet in U.S. Patent Specification No. 4320699 has no inherent form. U.S. Patent Specification No. 4363316 shows a series of irregular surfaces specifically designed to buckle and inhibit heat transfer, directly contrary to the intent of the present invention which deforms the surface in specific ways to become flat when heated to increase heat transfer from a range burner to a cooking utensil.

The cooking utensil according to the invention is intended for use on a cooking heat source such as range top electric coils, gas burners, ceramic cook tops, or other cooking heat sources designed to support a flat bottomed utensil above a source of cooking heat but not including a diffuse heat source such as the heated air of an oven, a warming tray, or a heat source remote from the pan bottom.

The raised area may comprise a first annular region of maximum elevation which surrounds a less elevated central region. Alternatively, the raised area may comprise a first annular region and a central region of maximum elevation and a less elevated coaxial annular region located between said central region and said first annular region. As a further alternative, the raised area may comprise a pair of coaxial annular regions of maximum elevation which are separated by a less elevated coaxial annular region with a less elevated central region located within the innermost annular region of maximum elevation.

Preferably, the or each less elevated region has an elevation of between 0.02 and 0.08cm above the lowermost plane of the bottom wall when the utensil is cold.

The bottom wall may extend in a substantially smooth curve upwardly from the lowermost plane of the bottom wall to the annular raised region of maximum elevation and downwardly to the less elevated region adjacent thereto.

According to one embodiment of the invention, the raised area extends from adjacent the periphery of the bottom wall upwardly in a smooth curve centred on the axis of the utensil at which said raised area reaches its maximum elevation when the utensil is cold. In an alternative embodiment, the raised area consists of a single region centred on the axis of the utensil and the region is abruptly raised from the lowermost plane of the bottom wall adjacent the periphery of the said bottom wall.

The cooking utensil according to the invention may be die formed with a circumferential line of points lying in the said lowermost plane of the bottom wall adjacent the periphery of said bottom wall, the raised area being located within said line of points. The deviation from the lowermost plane upwardly may occur primarily in a narrow annular region of the bottom wall.

The invention will now be further described, by way of example, with reference to the drawings, in which:-

Figure 1 is a vertical cross-sectional view through one embodiment of a cooking utensil according to the invention;

Figure 2 is a vertical cross-sectional view through a second embodiment of a cooking utensil according to the invention;

Figure 3 is a vertical cross-sectional view through a third embodiment of a cooking utensil according to the invention;

Figure 4 is a vertical cross-sectional view through a fourth embodiment of a cooking utensil according to the invention;

Figure 5 is a vertical cross-sectional view through a fifth embodiment of a cooking utensil according to the invention; and

Figure 6 is a vertical cross-sectional view through any of the embodiments shown in Figures 1 to 5 showing the cooking utensils after they have been heated and the bottom wall has become flat.

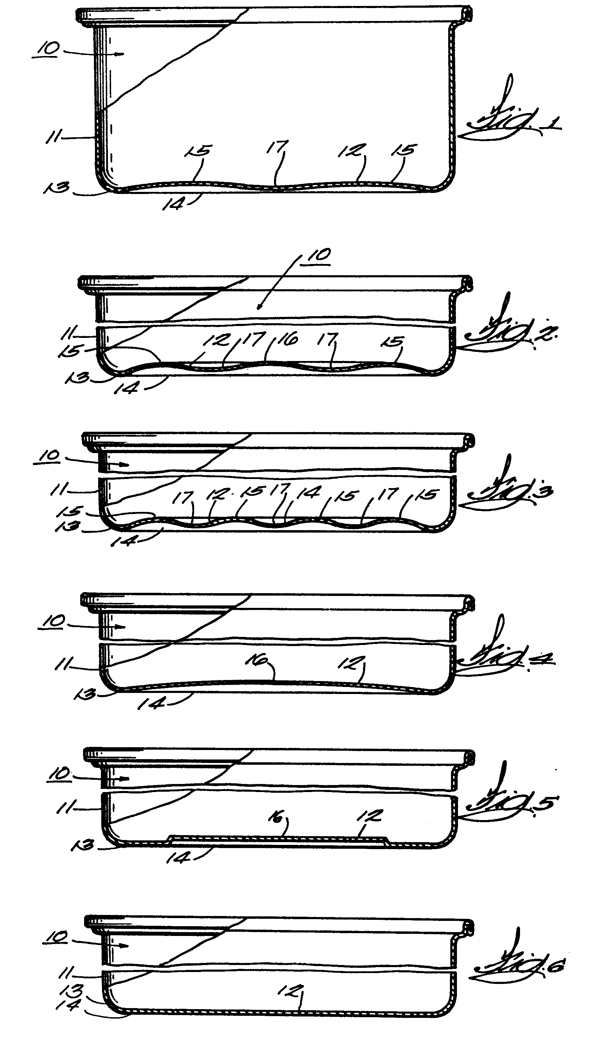

In all of the figures of the drawings, a die formed cooking utensil is shown generally as 10, having a side wall 11 of conventional form. In Figure 1 the cooking utensil comprises a pan provided with a bottom wall 12 having a conventional outer lowermost surface 13 lying in the plane 14 in which the cooking utensil is to contact the cooking heat source. Instead of die

- 6 -

forming the entire pan or utensil bottom to lie entirely in that plane, as is conventional, the present invention die-forms the bottom to deviate upwardly from the plane 14 to form at least one annular area 15 as shown in Figure 1 when it is cold. As shown in the alternative embodiment of Figure 2, the bottom may also have an upwardly die formed central area 16 with a less elevated area 17 coaxial with areas 15 or 16 and separating them. The embodiment of Figure 3 shows a pan bottom with two annular rings of raised areas 15. Figure 4 shows a single central raised area 16 without surrounding annular rings 15. Figure 5 is similar but the shape is somewhat different in that the rise to the raised area 16 is abrupt rather than gradual. All of the embodiments of Figures 1 to 5 have a flat bottom surface 12 as shown in Figure 6 which lies in the plane 14 level with the bottommost point 13, but only when the pans are heated. In this manner the heat transfer to the pan is greatly improved.

As shown in Figure 1, within the space enclosed by the raised area 15 of the bottom 12 is a depressed area 17 which is lower than the raised area 15 but above the plane 14. In the preferred form, the area 17 is never less than 0.5cm above the plane 14. The raised area 15 is 2.0 to 2.3cm above plane 14 in the pan of Figure 1 which is a 6.8 litre pan. In a pan of that size the diameter of the annular raised area 15 taken from crest to crest is 10.8cm or approximately 1/2 the diameter of the pan. In a pan of those dimensions the angle between the plane 14 and the bottom of the pan as it rises from the lower point 13 towards the crest of the raised area 15 is approximately 3 degrees. However these figures will vary. The embodiments shown in Figures 2 and 3 will necessarily have a larger rise than 3 degrees. Of course these figures assume a pan of similar proportions to that above discussed with reference to Figure 1.

If the pan shown in Figure 1 is a 6.8 litre pan having a diameter of approximately 24cm, the annular raised area 15 will have a crest to crest diameter of approximately 11.4cm or about 1/2 of the total pan diameter. Similarly the embodiment of Figure 2 has an annular raised area 15 and a central area 16, and the pan bottom is divided into thirds measured from dip 17 to dip 17. In the embodiment of Figure 3, the inner annular raised area 15 has a diameter of 1/4 the pan diameter, the dip 17 has a diameter of 1/2 the pan diameter, and the outer annular raised area 15 has a diameter 3/4 of the pan diameter. Since the embodiments of Figures 4 and 5 have only a single central raised area 16 these statistics are not applicable to those embodiments. However in all embodiments the highest areas 15 and 16 of the bottom are preferably about 0.20 to 0.23cm above the plane 14 and intermediate low points 17 are preferably die formed to be approximately 0.04 to 0.06cm above the plane 14 when the pan is cold. In all embodiments the bottom flattens to the form shown in Figure 6 when heated.

The applicant does not have a physical theory to explain the flattening of the die formed bottom when heated but it is apparent that because it flattens the heat transfer from an underlying heat source such as respective turns of an electric stove heating element or the flat surface of a ceramic heating element will be greatly improved.  Any drawing or forming process is believed appropriate that uses at least one die to cause the cold pan to have the required shape so that the heated pan becomes flat bottomed.

0175462

- 1 -

CLAIMS

1.    A die formed cooking utensil for use on a cooking
heat source, and having a side wall and a bottom wall,
wherein the bottom wall is provided with a raised area
generally centred on the centre of the utensil, said
raised area having a maximum elevation of between 0.17
and 0.25cm above the lowermost plane of the bottom
wall when said utensil is cold, said bottom wall being
deformed to be substantially planar when heated to
cooking temperature.

2.    A cooking utensil according to claim 1, wherein
said raised area comprises a first annular region of
maximum elevation which surrounds a less elevated
central region.

3.    A cooking utensil according to claim 1, wherein
said raised area comprises a first annular region and
a central region of maximum elevation and a less
elevated coaxial annular region located between said
central region and said first annular region.

4.    A cooking utensil according to claim 1, wherein
said raised area comprises a pair of coaxial annular
regions of maximum elevation which are separated by a
less elevated coaxial annular region and wherein a
less elevated central region is located within the
innermost annular region of maximum elevation.

5.    A cooking utensil according to any one of claims 2 to 4, wherein the or each less elevated region has an elevation of between 0.02 and 0.08cm above the lowermost plane of the bottom wall when the utensil is cold.

6.    A cooking utensil according to any one of claims 2 to 5, wherein the bottom wall extends in a substantially smooth curve upwardly from the lowermost plane of the bottom wall to the annular raised region of maximum elevation and downwardly to the less elevated region adjacent thereto.

7.    A cooking utensil according to claim 1, wherein said raised area extends from adjacent the periphery of the bottom wall upwardly in a smooth curve centred on the axis of the utensil at which said raised area reaches its maximum elevation when the utensil is cold.

8.    A cooking utensil according to claim 1, wherein said raised area consists of a single region centred on the axis of the utensil and wherein said region is abruptly raised from the lowermost plane of the bottom wall adjacent the periphery of said bottom wall.

9.    A cooking utensil according to any preceding claim, wherein the utensil is die formed with a circumferential line of points lying in said lowermost plane of the bottom wall adjacent the periphery of said bottom wall, the raised area being located within said line of points.

0175462

10.  A cooking utensil according to claim 9, wherein
the deviation from the lowermost plane upwardly occurs
primarily in a narrow annular region of said bottom
wall.

0175462

Fig. 1

Fig. 2

Fig. 3

Fig. 4

Fig. 5

Fig. 6